# EUROPÄISCHE PATENTSCHRIFT

(11) **EP 2 559 505 B1**
(45) Veröffentlichungstag und Bekanntmachung des Hinweises auf die Patenterteilung: **05.10.2016**
(21) Anmeldenummer: 12180624.4
(22) Anmeldetag: 16.08.2012
(51) Int. Cl.: B23B 31/11

(54) **Spannfutter für Kugelbahnfräser**
Clamping chuck for ball race mill
Mandrin de serrage pour fraise de chemins de roulement à billes

(30) Priorität: 16.08.2011 DE 102011052753
(43) Veröffentlichungstag der Anmeldung: 20.02.2013
(73) Patentinhaber: Gühring OHG, 72458 Albstadt (DE)
(72) Erfinder: Bozkurt, Lutfi, 72474 Winterlingen (DE)
(74) Vertreter: Meitinger, Thomas Heinz

(56) Entgegenhaltungen:
- EP-A1- 1 206 990
- DE-A1- 4 427 051
- DE-A1-102008 008 335
- JP-A- 6 179 105
- JP-A- 60 104 625
- JP-U- 61 205 735

## Beschreibung

### GEBIET DER ERFINDUNG

Die vorliegende Erfindung betrifft ein Spannfutter gemäß dem Oberbegriff des Anspruchs 1, zum Einspannen eines Kugelbahnfräsers.

Ein solches Spannfutter ist aus der EP-A-1206990 bekannt.

### HINTERGRUND DER ERFINDUNG

Im Stand der Technik sind Spannfutter bzw. Werkzeugfutter bekannt, durch die Werkzeuge, wie beispielsweise Kugelbahnfräser, in eine Werkzeugmaschine eingespannt werden können.

### ZUSAMMENFASSUNG DER ERFINDUNG

Werkzeuge, insbesondere Kugelbahnfräser, sind bei der Bearbeitung von Werkstücken hohen mechanischen Belastungen, beispielsweise auch Querbelastungen, ausgesetzt. Es sollte daher sichergestellt werden, dass das Werkzeug in einer betreffenden Werkzeugmaschine mechanisch ausreichend stabil eingespannt ist. Außerdem werden immer kürzere Umrüstzeiten gefordert, um einen hohen Produktionsausstoß erzielen zu können. Das betroffene Bedienpersonal kann daher einem Zielkonflikt ausgesetzt sein, zwischen einer zeitlich aufwändigen und daher stabilen Befestigung eines Werkzeugs an einer Werkzeugmaschine und einem schnellen Umrüsten.

Eine Aufgabe ist daher, ein Spannfutter zur Verfügung zu stellen, das ein mechanisch sehr stabiles Einspannen ermöglicht, wobei dennoch zeitlich kurze Umrüstzeiten realisiert werden können.

Als erste Ausführungsform der Erfindung wird ein Spannfutter zum Einspannen eines Kugelbahnfräsers zur Verfügung gestellt, umfassend: ein Schneckengetriebe mit einem Schneckenrad und einer Schnecke, wobei das Spannfutter eine Hülse mit einem ersten Innengewinde umfasst, wobei die Hülse durch eine Rotationsbewegung des Schneckenrads axial bewegbar ist, wobei in das erste Innengewinde ein erstes Außengewinde des Kugelbahnfräsers eingreifbar angeordnet ist.

Erfindungsgemäß wird eine Hülse innerhalb eines Spannfutters vorgesehen, in die ein Kugelbahnfräser eingeschraubt werden kann, wobei die Hülse durch ein Schneckengetriebe axial verfahrbar ausgebildet sein kann. Vorteilhafterweise wird dadurch sicher gestellt, dass das Gewinde das den Kugelbahnfräser festhält und das Gewinde, das in das Schneckenrad eingreift und durch das eine axiale Bewegung zum Einspannen ermöglicht wird, zwei unterschiedliche separate Gewinde sind. Falls daher der Kugelbahnfräser durch das Bedienpersonal tief genug in die Hülse eingeschraubt wird, kann eine insgesamt mechanisch stabile Verbindung zwischen Kugelbahnfräser und Werkzeugmaschine gewährleistet werden, da durch das Werkzeug selbst sichergestellt werden kann, dass trotz axialen Verfahrens zum Einspannen des Kugelbahnfräsers keinesfalls nur eine oder nur wenige Gewindegänge zur Befestigung der Hülse innerhalb des Schneckengetriebes dienen.

Beispielhafte Ausführungsformen werden in den abhängigen Ansprüchen beschrieben.

Gemäß der Erfindung wird ein Spannfutter zur Verfügung gestellt, wobei die Hülse ein zweites Außengewinde aufweist, wobei das zweite Außengewinde in ein zweites Innengewinde des Schneckenrads eingreifbar angeordnet ist.

Die Verbindung zwischen Hülse und Schneckengetriebe erfolgt über eine Außengewinde/Innengewinde-Verbindung wodurch auf eine einfache konstruktive Weise ein axiales Verschieben der Hülse durch eine Rotationsbewegung des Schneckenrads erzielt werden kann.

Erfindungsgemäß wird ein Spannfutter zur Verfügung gestellt, wobei das zweite Außengewinde gegenüber dem ersten Innengewinde axial versetzt angeordnet ist.

Die Anordnung des ersten Innengewindes gegenüber dem zweiten Außengewinde ermöglicht eine Verlängerung des Spannfutters mit einem schlanken vorderen Bereich, wodurch der Kugelbahnfräser auch tiefer liegende Kugelbahnen fräsen kann. Gemäß einem weiteren Ausführungsbeispiel der vorliegenden Erfindung wird ein Spannfutter zur Verfügung gestellt, wobei das Spannfutter einen Anschlag für den Kugelbahnfräser aufweist.

Durch einen Anschlag kann sichergestellt werden, dass der betreffende Kugelbahnfräser ausreichend tief in eine erfindungsgemäße Hülse eingeschraubt wird, wodurch ein mechanisch stabiles Einspannen des Kugelbahnfräsers erreicht werden kann.

Gemäß einer beispielhaften Ausführungsform der Erfindung wird ein Spannfutter zur Verfügung gestellt, wobei das Spannfutter einen Anschlag für die Hülse aufweist.

Ein Anschlag für die Hülse kann ein zu tiefes Einfahren der Hülse in das Spannfutter verhindern, wodurch ein Verklemmen ausgeschlossen werden kann.

In einer weiteren erfindungsgemäßen Ausführungsform wird ein Spannfutter zur Verfügung gestellt, wobei die Schnecke ein Innenprofil aufweist, beispielsweise einen Innensechskant, und/oder wobei das Innenprofil von außen zugänglich ist.

Durch die Anordnung eines Innenprofils, beispielsweise eines Innensechskants kann in einfacher Weise, durch z.B. einen Steckschlüssel bzw. einen Spannschlüssel, ein Antreiben des Schneckengetriebes erreicht werden, wodurch ein Ein- und Ausspannen eines Werkzeugs, wie z.B. eines Kugelbahnfräsers, ermöglicht werden kann.

Gemäß einem weiteren Ausführungsbeispiel der vorliegenden Erfindung wird ein Spannfutter zur Verfügung gestellt, wobei das Spannfutter eine HSK-Schnittstelle oder eine Steilkegel-Schnittstelle aufweist.

Die Anordnung einer Hohlschaftkegel-Schnittstelle oder einer Steilkegel-Schnittstelle ermöglicht ein mechanisch stabiles Einsetzen des Spannfutters in eine entsprechende Werkzeugmaschine.

In einer weiteren erfindungsgemäßen Ausführungsform wird ein Spannfutter zur Verfügung gestellt, wobei das Spannfutter einen Innenkegel zur Aufnahme eines kegeligen Abschnitts des Kugelbahnfräsers aufweist.

Ein kegeliger Bereich des Spannfutters zur Aufnahme eines kegeligen Abschnitts des Kugelbahnfräsers ermöglicht ein Zentrieren des Kugelbahnfräsers in dem betreffenden Spannfutter.

Als eine Idee der Erfindung kann angesehen werden, ein Spannfutter mit einer Hülse zur Verfügung zu stellen, wobei die Hülse durch ein Schneckengetriebe axial verschiebbar ausgebildet ist und die mit einem Kugelbahnfräser lösbar mechanisch verbunden, z.B. verschraubt, werden kann. Ein Gewinde der Hülse kann zum axialen Bewegen der Hülse genutzt werden. Insgesamt kann daher ein erstes Gewinde zum Verbinden mit dem Kugelbahnfräser und ein weiteres Gewinde zum axialen Verfahren vorgesehen sein.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

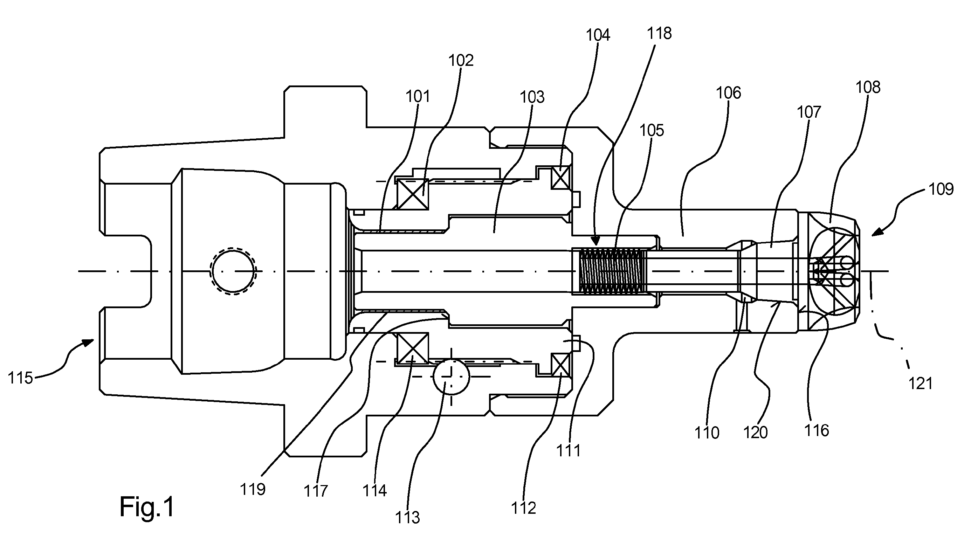

Weitere Einzelheiten und Vorteile der Erfindung werden anhand des in der Zeichnung dargestellten Ausführungsbeispiels deutlich. Es zeigt
Figur 1 ein Spannfutter für einen Kugelbahnfräser.

### DETAILLIERTE BESCHREIBUNG BEISPIELHAFTER AUSFÜHRUNGSFORMEN

Fig. 1 zeigt ein Spannfutter für einen Kugelbahnfräser, wobei der Kugelbahnfräser mehrere Abschnitte aufweist, und zwar beispielsweise einen Abschnitt mit einem Außengewinde 105, das in ein Innengewinde 118 einer Hülse 103 eingreifen kann. Einen weiteren Abschnitt 107, der kegelig ausgebildet ist, und in einen Innenkegel 120 einer Aufnahme 106 eingespannt werden kann und einen Werkzeugkopf 109, der Schneiden 108 zur Bearbeitung eines Werkstücks aufweist. Das Spannfutter weist ein Schneckengetriebe zum Ein- und Ausspannen eines Kugelbahnfräsers mit einem Schneckenrad 111 auf, das von einem Schneckenrad 113 angetrieben werden kann. Das Schneckenrad 113 kann beispielsweise einen Innensechskant umfassen, in den ein Spannschlüssel eingreifen kann. Hierdurch kann von außen das Schneckenrad 111 um seine Längsachse rotiert werden, wodurch über eine Innengewinde-/Außengewinde-Verbindung die Hülse 103 axial, also entlang seiner Längsachse 121, verfahren werden kann. Durch die axiale Bewegung der Hülse 103 kann ein in das Spannfutter eingesetzter Kugelbahnfräser eingespannt werden, falls die Hülse 103 in Richtung der HSK-Schnittstelle 115 verfahren wird. Wird die Hülse 103 weg von der HSK-Schnittstelle 115 bewegt, kann der Kugelbahnfräser ausgespannt werden. Im ausgespannten Zustand kann der Kugelbahnfräser ausgeschraubt werden, d.h. das Außengewinde 105 wird aus der Hülse 103 geschraubt und ein Werkzeugwechsel kann vorgenommen werden. Ein Einspannvorgang erfolgt durch Einsetzen des Kugelbahnfräsers in das Spannfutter, wobei der Kugelbahnfräser in die Hülse 103 eingeschraubt wird. Durch eine Rotation der Schnecke 113 um seine Längsachse, beispielsweise durch einen eingesteckten Spannschlüssel, wird das Schneckenrad 111 zur Rotation um dessen Längsachse gebracht und die Hülse 103 kann beispielsweise zur HSK-Schnittstelle 115 verfahren werden, wodurch der Kugelbahnfräser ebenfalls zur HSK-Schnittstelle 115 bewegt wird und zur Auflage an der Aufnahme 106 an der Position 116 gebracht werden kann, wodurch der Kugelbahnfräser eingespannt ist. Vorteilhafterweise kann durch das erfindungsgemäße Spannprinzip verhindert werden, dass durch einen Bedienfehler zwischen Hülse 103 und Schneckenrad 111 nur wenige oder nur einzelne Gewindegänge im Eingriff stehen. Ein Ausbrechen der Hülse 103 aus dem Schneckenrad 111 kann deshalb sicher verhindert werden.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 101: Außengewinde der Hülse
- 102: Lager
- 103: Hülse
- 104: Lager
- 105: Außengewinde des Kugelbahnfräsers
- 106: Aufnahme des Spannfutters
- 107: kegeliger Abschnitt des Kugelbahnfräsers
- 108: Schneide des Kugelbahnfräsers
- 109: Kopf des Kugelbahnfräsers
- 110: Freiraum der Aufnahme
- 111: Schneckenrad
- 112: Lager
- 113: Schnecke
- 114: Lager
- 115: HSK-Schnittstelle
- 116: Anschlag
- 117: Anschlag
- 118: Innengewinde der Hülse
- 119: Innengewinde des Schneckenrads
- 120: Innenkegel des Spannfutters
- 121: Längsachse

## Patentansprüche

1. Spannfutter zum Einspannen eines Kugelbahnfräsers umfassend
ein Schneckengetriebe mit einem Schneckenrad (111) und einer Schnecke (113), wobei das Spannfutter eine Hülse (103) mit einem ersten Innengewinde (118) umfasst, wobei die Hülse (103) durch eine Rotationsbewegung des Schneckenrads (111) axial bewegbar ist, wobei in das erste Innengewinde (118) ein erstes Außengewinde (105) des Kugelbahnfräsers eingreifbar angeordnet ist,
wobei die Hülse (103) ein zweites Außengewinde (101) aufweist, wobei das zweite Außengewinde (101) in ein zweites Innengewinde (119) des Schneckenrads (111) eingreifbar angeordnet ist, **dadurch gekennzeichnet, dass** das zweite Außengewinde (101) gegenüber dem ersten Innengewinde axial versetzt angeordnet ist und dass das erste Innengewinde (118) in einer Verlängerung der Hülse (103) angeordnet ist.

2. Spannfutter nach Anspruch 1, **dadurch gekennzeichnet, dass** das zweite Außengewinde (101) gegenüber dem ersten Innengewinde (118) angeordnet ist.

3. Spannfutter nach einem der Ansprüche 1 oder 2, **dadurch gekennzeichnet, dass** das Spannfutter einen Anschlag (116) für den Kugelbahnfräser aufweist.

4. Spannfutter nach einem der vorhergehenden Ansprüche, **dadurch gekennzeichnet, dass** das Spannfutter einen Anschlag (117) für die Hülse (103) aufweist.

5. Spannfutter nach einem der vorhergehenden Ansprüche, **dadurch gekennzeichnet, dass** die Schnecke (113) ein Innenprofil aufweist, beispielsweise einen Innensechskant, und/oder wobei das Innenprofil von außen zugänglich ist.

6. Spannfutter nach einem der vorhergehenden Ansprüche, **dadurch gekennzeichnet, dass** das Spannfutter eine HSK-Schnittstelle (115) oder eine Steilkegel-Schnittstelle aufweist.

7. Spannfutter nach einem der vorhergehenden Ansprüche, **dadurch gekennzeichnet, dass** das Spannfutter einen Innenkegel (120) zur Aufnahme eines kegeligen Abschnitts (107) des Kugelbahnfräsers aufweist.

## Claims

1. Chuck for clamping a ball nose milling cutter, comprising
a worm gear having a worm wheel (111) and a worm (113), wherein the chuck comprises a sleeve (103) with a first internal thread (118), wherein the sleeve (103) is axially movable by a rotary movement of the worm wheel (111), wherein a first external thread (105) of the ball nose milling cutter is arranged so as to be able to engage with the first internal thread (118),
wherein the sleeve (103) has a second external thread (101), wherein the second external thread (101) is arranged so as to be able to engage with a second internal thread (119) of the worm wheel (111), **characterized in that** the second external thread (101) is arranged in an axially offset manner with respect to the first internal thread, and **in that** the first internal thread (118) is arranged in extension of the sleeve (103).

2. Chuck according to Claim 1, **characterized in that** the second external thread (101) is arranged opposite the first internal thread (118).

3. Chuck according to either of Claims 1 and 2, **characterized in that** the chuck has a stop (116) for the ball nose milling cutter.

4. Chuck according to one of the preceding claims, **characterized in that** the chuck has a stop (117) for the sleeve (103).

5. Chuck according to one of the preceding claims, **characterized in that** the worm (113) has an internal profile, for example a hexagon socket, and/or wherein the internal profile is accessible from the outside.

6. Chuck according to one of the preceding claims, **characterized in that** the chuck has a hollow shank taper interface (115) or a steep taper interface.

7. Chuck according to one of the preceding claims, **characterized in that** the chuck has an internal taper (120) for receiving a conical portion (107) of the ball nose milling cutter.

## Revendications

1. Mandrin de serrage pour serrer une fraise de chemin de roulement à billes, comprenant :
un entraînement à vis sans fin avec une roue à denture hélicoïdale (111) et une vis sans fin (113), le mandrin de serrage comprenant une douille (103) avec un premier filetage intérieur (118), la douille (103) pouvant être déplacée axialement par un mouvement de rotation de la roue à denture hélicoïdale (111), un premier filetage extérieur (105) de la fraise de chemin de roulement à billes étant disposé de manière à pouvoir être engagé dans le premier filetage intérieur (118),
la douille (103) présentant un deuxième filetage extérieur (101), le deuxième filetage extérieur (101) étant disposé de manière à pouvoir s'engager dans un deuxième filetage intérieur (119) de la roue à denture hélicoïdale (111),
**caractérisé en ce que** le deuxième filetage extérieur (101) est disposé de manière décalée axialement par rapport au premier filetage intérieur et **en ce que** le premier filetage intérieur (118) est disposé dans un prolongement de la douille (103).

2. Mandrin de serrage selon la revendication 1, **caractérisé en ce que** le deuxième filetage extérieur (101) est disposé à l'opposé du premier filetage intérieur (118).

3. Mandrin de serrage selon l'une quelconque des revendications 1 ou 2, **caractérisé en ce que** le mandrin de serrage présente une butée (116) pour la fraise de chemin de roulement à billes.

4. Mandrin de serrage selon l'une quelconque des revendications précédentes, **caractérisé en ce que** le mandrin de serrage présente une butée (117) pour la douille (103).

5. Mandrin de serrage selon l'une quelconque des revendications précédentes, **caractérisé en ce que** la vis sans fin (113) présente un profil intérieur, par exemple un profil à six pans creux et/ou le profil intérieur étant accessible depuis l'extérieur.

6. Mandrin de serrage selon l'une quelconque des revendications précédentes, **caractérisé en ce que** le mandrin de serrage présente une interface HSK (115) ou une interface à queue conique.

7. Mandrin de serrage selon l'une quelconque des revendications précédentes, **caractérisé en ce que** le mandrin de serrage présente un cône intérieur (120) pour recevoir une portion conique (107) de la fraise de chemin de roulement à billes.
